# EUROPÄISCHE PATENTSCHRIFT

(11) **EP 3 339 650 B1**
(45) Veröffentlichungstag und Bekanntmachung des Hinweises auf die Patenterteilung: **10.08.2022**
(21) Anmeldenummer: 16205701.2
(22) Anmeldetag: 21.12.2016
(51) Int. Cl.: F04D 13/06, F04D 15/00, G01D 1/12, G01D 3/024

(54) **ELEKTROMOTORISCH ANGETRIEBENE PUMPE**
ELECTRIC MOTOR DRIVEN PUMP
POMPE À MOTEUR ÉLECTRIQUE

(43) Veröffentlichungstag der Anmeldung: 27.06.2018
(73) Patentinhaber: Grundfos Holding A/S, 8850 Bjerringbro (DK)
(72) Erfinder: Aarestrup, Jan Carøe, 8850 Bjerringbro (DK); Mikkelsen, Anders Silkær, 8680 Ry (DK); Christensen, Carsten, 2880 Bagsværd (DK); Møller, Simon Mølgaard, 8600 Silkeborg (DK); Nielsen, Rasmus Ørndrup, 8600 Silkeborg (DK)
(74) Vertreter: Patentanwälte Vollmann Hemmer Lindfeld Partnerschaft mbB

(56) Entgegenhaltungen:
- EP-A2- 2 246 569
- JP-A- 2007 077 832
- US-A1- 2008 247 448
- US-A1- 2011 257 936
- US-A1- 2013 211 744
- US-B2- 7 365 452

## Beschreibung

Die Erfindung betrifft eine elektromotorisch angetriebene Pumpe mit einer Steuerelektronik, welche zum Anschluss mindestens eines Sensors vorgesehen ist.

Pumpen dieser Art, die mit einer Steuerelektronik versehen sind, weisen typischerweise einen Frequenzumrichter auf, der es möglich macht, die Betriebspunkte der Pumpe innerhalb des vorgegebenen Leistungsspektrums nahezu beliebig anzupassen. Pumpenseitig ist hierzu zum Beispiel ein Differenzdrucksensor vorgesehen. Insbesondere bei Pumpensystemen sowie Pumpen größerer Bauart zählt es zum Stand der Technik, ein oder mehrere Sensoren an die Steuerelektronik anzuschließen, um darüber die Pumpe mit zu steuern oder in einem Regelkreis zu betreiben.

Dabei ist nicht nur die Art der anzuschließenden Sensoren vielfältig, auch innerhalb einer Sensorart gibt es, je nach Einsatzgebiet, deutliche Unterschiede. So ist es zur Steuerung von Dosierpumpen bekannt, den Durchfluss des Mediums zu messen, in welches ein Stoff, zum Beispiel ein Desinfektionsmittel, einzudosieren ist. Bei Pumpen, die in ein druckführendes System einspeisen oder in ein geodätisches Behältnis (Wasserturm, Speichersee), ist der Druck zu erfassen, der druckseitig der Pumpe zu überwinden ist, um fördern zu können. Auch kann es bei Umwälzpumpen erforderlich sein, die Temperatur zu erfassen, um in Abhängigkeit der Temperatur des Fördermediums die Pumpe leistungsmäßig anzusteuern, wie dies bei Heizungsumwälzpumpen zum Stand der Technik zählt.

Da der Pumpenhersteller seine Pumpen für unterschiedlichste Einsatzgebiete konzipiert und nicht weiß, für welchen konkreten Einsatzzweck die Pumpe vorgesehen werden soll, ist es häufig erforderlich, die zum Betrieb der Pumpe erforderliche Sensorik zum einen auszuwählen und zum anderen zu dimensionieren. Letzteres ist häufig schwierig, da nur eine grobe Abschätzung vor der Inbetriebnahme möglich ist und eine an sich erforderliche Dimensionsanpassung der Sensorik später aus Kostengründen häufig nicht erfolgt. Dies führt dazu, dass in der Praxis häufig Sensoren mit einem viel zu großen Messbereich ausgewählt werden, mit der Folge, dass ihnen in dem tatsächlich erforderlichen kleinen Messbereich die erforderliche Genauigkeit fehlt.

Aus US 7,624,080 B1 zählt es zwar zum Stand der Technik, die Signale mehrerer Sensoren mit Hilfe einer Datenbank auf Konsistenz hin zu überprüfen und dann, wenn diese nicht gegeben ist, das entsprechende Sensorsignal zur Auswertung nicht heranzuziehen. Doch löst dies das eingangs geschilderte Problem nicht.

Aus EP 2 246 569 A2 zählt es zum Stand der Technik, die Steuerung des Pumpenmotors sensorlos zu gestalten, indem anhand der Eingangsspannung des Pumpenmotors und des Motorstroms ein im wesentlichen konstanter Druck ermittelt und gehalten wird.

Aus US 2013/0211744 A1 ist es bekannt, in der Druckleitung der Pumpe einen Drucksensor zur Überwachung des Förderdrucks anzuordnen. Der dort verwendete Sensor ist völlig unabhängig von der Pumpe, hat eine eigene Sensorelektronik und kann zur Überwachung des Pumpendrucks, aber auch des Fördervolumens eingesetzt werden.

Aus JP 2007077832 A zählt es zum Stand der Technik, mittels eines Drucksensors den Förderdruck einer Hydraulikpumpe zu bestimmen, der Messbereich des Drucksensors ist vorgegeben.

Vor diesem Hintergrund liegt der Erfindung die Aufgabe zugrunde, eine elektromotorisch angetriebene Pumpe mit einer Steuerelektronik, welche zum Anschluss mindestens eines Sensors vorgesehen ist, so auszubilden, dass die vorerwähnten Probleme zumindest verringert werden.

Diese Aufgabe wird durch eine elektromotorisch angetriebene Pumpe mit den in Anspruch 1 aufgeführten Merkmalen gelöst. Vorteilhafte Ausgestaltungen der Erfindung sind in den Unteransprüchen, der nachfolgenden Beschreibung und den Zeichnungen angegeben.

Die elektromotorisch angetriebene Pumpe weist eine Steuerelektronik auf, welche zum Anschluss mindestens eines Sensors vorgesehen ist. Gemäß der Erfindung ist die Steuerelektronik dazu ausgebildet, das mindestens eine Ausgangssignal des mindestens einen angeschlossenen Sensors kontinuierlich oder in zeitlichen Abständen zu erfassen und nach Ablauf einer vorbestimmten Zeit anhand der erfassten Werte selbsttätig den Messbereich des Sensors festzulegen und nach Ablauf einer vorbestimmten Zeit anhand der erfassten Maximal- und Minimalwerte des Ausgangssignals selbsttätig den Messbereich des Sensors festzulegen und diesen Messbereich durch ein Stellsignal in eine Sensorelektronik des Sensors zu übertragen.

Elektromotorisch angetriebene Pumpe im Sinne der vorliegenden Erfindung kann eine Verdrängerpumpe, beispielsweise eine Kolben- oder Membranpumpe, zum Beispiel als Teil einer Dosierpumpe oder auch einer Kreiselpumpe sein, wobei diese ein- oder mehrstufig ausgebildet sein kann. Die Steuerelektronik ist typischerweise Teil einer Umformerelektronik, bei Kreiselpumpen typischerweise eines Frequenzumrichters.

Unter Sensor im Sinne der vorliegenden Erfindung ist typischerweise ein Sensorelement, beispielsweise ein Dehnungsmessstreifen, zu verstehen, der mit einer Sensorelektronik zusammen wirkt, welche ein Sensorsignal, typischerweise eine Spannung oder auch einen Strom zur Verfügung stellt, welche in der Steuerelektronik für Steuer- und/oder Regelzwecke genutzt werden kann. Dabei spielt es für die Verwirklichung der vorliegenden Erfindung keine Rolle, ob Sensorelement und Sensorelektronik gesondert als Baugruppe ausgebildet sind oder ob die Sensorelektronik bereits Teil der Steuerelektronik bildet.

Grundsätzlich kann an die erfindungsgemäße Pumpe jeder beliebige, in irgendeiner Weise geeignete Sensor angeschlossen sein. Vorteilhaft wird es sich jedoch um einen Sensor handeln, welcher messbare Eigenschaften von Flüssigkeiten erfasst. In diesem Zusammenhang sind insbesondere Drucksensor, Differenzdrucksensor, Temperatursensor, Sensor zur Erfassung des PH-Wertes oder Sensor zur Erfassung des Durchflusses zu nennen.

Grundgedanke der erfindungsgemäßen Lösung ist es, das Ausgangssignal des mindestens einen angeschlossenen Sensors entweder ständig oder in zeitlichen Abständen zu erfassen und nach Ablauf einer vorbestimmten Zeit anhand der erfassten Messwerte selbsttätig den Messbereich des Sensors festzulegen. Vorzugsweise erfolgt die Erfassung kontinuierlich, wobei es zweckmäßig ist, den oder die zeitlichen Abstände, in welchen eine Anpassung des Messbereichs des Sensors erfolgt, einerseits so kurz zu wählen, dass die Anpassung ausreichend schnell erfolgt und andererseits so lang zu wählen, dass mit hoher Wahrscheinlichkeit alle in der Praxis zu erwartenden Sensorereignisse anfallen werden. Dies wird je nach Pumpentyp unterschiedlich sein, es ist gemäß der Erfindung denkbar, diese vorbestimmte Zeit an der Steuerelektronik der Pumpe einstellbar zu gestalten, um erforderlichenfalls eine individuelle Anpassung zu ermöglichen.

In der Regel günstiger wird hingegen sein, durch einen geeigneten Anpassalgorithmus dafür zu sorgen, dass anfänglich in vergleichsweise kurzen und im späteren Betrieb in vergleichsweise längeren Intervallen die Anpassung des Messbereichs durch die Steuerelektronik überprüft und gegebenenfalls revidiert wird.

So ist gemäß einer vorteilhaften Weiterbildung der Erfindung vorgesehen, die Steuerelektronik der Pumpe so auszulegen, dass der Messbereich des mindestens einen Sensors in vorbestimmten Zeitintervallen anhand der in einem, vorzugsweise dem letzten vorangegangenen Zeitintervall erfassten Werte selbsttätig durch die Steuerelektronik überprüft und bei Überschreiten eines vorbestimmten Wertes nach oben und/oder nach unten angepasst wird. Dabei ist es für die Anpassung wichtig, dass diese nicht nur zu einer weiteren Einschränkung des Messbereiches anpasst, sondern auch in der Lage ist, diesen gegebenenfalls wieder aufweitend anzupassen. So kann es beispielsweise bei Temperatursensoren in einer Heizungsanlage bis zu einem halben bis dreiviertel Jahr dauern, bis der Sensor alle im Betrieb zu erwartenden Temperaturen durchlaufen hat. Ähnlich verhält es sich bei Drucksensoren von Pumpen, welche in Abwassersystem eingesetzt werden, deren Kapazität letztlich nur bei Überflutungen vollständig ausgenutzt wird.

Hierzu sieht die Erfindung in einer Weiterbildung vor, dass die Steuerelektronik der Pumpe so ausgelegt ist, dass dann, wenn die im vorangegangenen Zeitintervall erfassten Werte für eine aufsummierte Zeitdauer von mehr als 5% bis 25% des Zeitintervalls auf der unteren und/oder oberen Grenze des festgelegten Messbereichs liegen, die Festlegung des Messbereichs nicht angepasst, sondern, wie bei einer Erstinbetriebnahme, neu festgelegt wird. Die Werte von 5% bis 25% haben sich als praktikabel erwiesen, können jedoch je nach Anwendungsbereich auch darunter liegen, für bestimmte Anwendungen kann es kritisch sein, wenn die obere oder untere Grenze des festgelegten Messbereichs überhaupt erreicht wird. Unter Werten für eine aufsummierte Zeitdauer z. B. von mehr als 5% des Zeitintervalls ist zu verstehen, dass die in dem Zeitintervall erfassten Werte für eine Zeitdauer von 5% des Zeitintervalls auf einer Grenze des festgelegten Messbereichs liegen. Da der Messbereich zuvor festgelegt worden ist, können die erfassten Werte diesen nicht übersteigen. Es ist also mit hoher Wahrscheinlichkeit davon auszugehen, dass dann, wenn die Grenze dieses Messbereichs erreicht ist, die tatsächlichen Werte über den zuvor festgelegten Grenzen des Messbereiches liegen.

Bevorzugt ist die Steuerelektronik der Pumpe dazu ausgelegt, nicht nur den Messbereich des mindestens einen daran angeschlossenen Sensors selbsttätig zu erfassen und festzulegen bzw. anzupassen, sondern bevorzugt ist die Steuerelektronik dazu ausgelegt, selbsttätig zu erfassen, wenn ein Sensor angeschlossen worden ist und vorzugsweise im Weiteren auch zu erfassen und zu registrieren, um welche Art von Sensor es sich handelt. Alternativ oder zusätzlich kann die Steuerelektronik zur externen Dateneingabe vorgesehen sein, das heißt, dass entweder durch geeignete Einstellmittel an der Pumpe oder beispielsweise durch eine App auf einem Smartphone, Tablet oder mobilen Computer, welches/welcher zur Kommunikation mit der Steuerelektronik vorgesehen ausgebildet ist, diese Dateneingabe erfolgt.

Bevorzugt ist die Steuerelektronik zur selbsttätigen Ermittlung des Sensors ausgelegt, was bei Anschluss des Sensors bzw. beim erstmaligen Einschalten der Pumpe erfolgt. Dabei wird vorteilhaft nicht nur die Art des Sensors, sondern auch eine Identifizierungskennzeichnung erfasst. Typischerweise ist bei Anschluss eines erstmals in Betrieb gehenden Sensors der maximal mögliche Messbereich eingestellt, der dann den aktuellen Messbereich bildet.

Besonders vorteilhaft ist es, wenn die Steuerelektronik der Pumpe dazu ausgebildet ist, entsprechend dem festgelegten Messbereich die Verstärkung des Sensorsignals anzupassen. Die Anpassung erfolgt vorteilhaft derart, dass der festgelegte Messbereich möglichst vollständig ausgenutzt wird. Wenn beispielsweise ein Drucksensor, dessen Sensorelement für einen Messbereich von 0 bis 10 bar ausgelegt ist, durch die Steuerelektronik auf einen Messbereich von 0 bis 2 bar festgelegt wird, dann ist es zweckmäßig, die Verstärkung des Sensorsignals so anzupassen, dass bereits bei 2 bar ein Sensorsignal entsteht, wie es sonst bei 10 bar der Fall wäre. Hierdurch kann die Messgenauigkeit in dem festgelegten Messbereich erhöht werden.

In analoger Weise ist es vorteilhaft, die Steuerelektronik dazu auszubilden, entsprechend dem festgelegten Messbereich den off-set des Sensorsignals anzupassen. Wenn beispielsweise ein Drucksensor, dessen Sensorelement für Messungen von 0 bis 10 bar geeignet ist, auf einen Messbereich von 5 bis 7 bar festgelegt wird, dann ist es zweckmäßig, den Offset auf 5 bar zu legen, das heißt, bei 5 bar den Nullpunkt des Messbereichs festzulegen. Offset im Sinne der vorliegenden Erfindung ist auch Bias. Zwar ist es vorteilhaft, den Offset, also die Anpassung des Nullpunktes nach erfolgter Verstärkung festzulegen, doch kann dies alternativ auch dadurch erfolgen, dass der Bias entsprechend angepasst wird, das heißt, die Nullpunktverschiebung vor der Verstärkung des Messsignals angepasst wird.

Die erfindungsgemäße Pumpe kann vorteilhaft eine Dosierpumpe sein, beispielsweise zum Dosieren von einem Desinfektionsmittel in das Wasser eines Schwimmbads. Als Sensoren können hier beispielsweise ein Chlorsensor, ein pH-Sensor und ein Drucksensor anschließbar sein.

Alternativ kann die Pumpe eine Kreiselpumpe, vorzugsweise eine Nasslaufkreiselpumpe sein, wie sie zum Umwälzen/Fördern von Flüssigkeiten in Heizungs- bzw. Klimaanlagen, aber auch in der Wasserversorgung eingesetzt wird. Eine solche Kreiselpumpe kann beispielsweise auch eine mehrstufige Kreiselpumpe einer Druckerhöhungsanlage oder einer Wasserversorgungsanlage für ein Hochhaus oder einen Stadtteil sein. Auch kann eine solche Kreiselpumpe Teil eines Abwassersystems sein. Den Anwendungen sind keine Grenzen gesetzt, die einsatzbare Sensorik ist vielfältig.

Besonders vorteilhaft ist es, wenn die Steuerelektronik der Pumpe eine Regelung umfasst, wie dies bei frequenzumrichtergesteuerten Pumpen regelmäßig der Fall ist, dass dann der Sensor, dessen Messbereich von der Steuerelektronik selbsttätig festgelegt wird, zur Erfassung einer Regelgröße, beispielsweise des Drucks, des Differenzdrucks oder des Volumenstroms vorgesehen ist. Es kann, wie weiter oben beschrieben, eine vollständig automatisierte Sensoridentifizierung durch die Steuerelektronik vorgesehen sein. In der Praxis wird es jedoch vorkommen, dass eine teilautomatisierte Sensoridentifizierung in der Steuerelektronik vorgesehen ist, so dass ein Teil der Sensordaten oder auch ein Teil der zu erwartenden Betriebsdaten, beispielsweise des zu erwartenden Messbereichs, steuerelektronikseitig eingegeben werden können. Hierzu ist es vorteilhaft, ein vorzugsweise drahtlos mit der Steuerelektronik verbundenes Eingabegerät vorzusehen, mit dem diese Daten eingegeben werden können. Dies kann typischerweise über ein Smartphone, Tablet oder einen anderen mobilen Computer erfolgen. Um eine drahtlose Datenkommunikation zu ermöglichen, ist in der Steuerelektronik ein entsprechendes Kommunikationsmodul vorgesehen, beispielsweise ein Infrarot-Modul, WLAN-Modul, ein Bluetooth-Modul oder ein Mobilfunkmodul, welches über die bekannten Mobilfunkstandards, zum Beispiel 3G, 4G, 5G verfügt. Eine solche Datenkommunikation kann auch zur Kontrolle und gegebenenfalls Anpassung des verwendeten Messbereichs dienen, so kann neben der automatischen Messbereichsanpassung zusätzlich oder alternativ auch eine externe Eingabemöglichkeit vorgesehen sein. Computerseitig ist zweckmäßigerweise hierzu eine entsprechende Softwareapplikation (App) vorgesehen, welche einerseits eine weitgehend automatisierte Datenkommunikation mit der Steuerelektronik der Pumpe ermöglicht und welche darüber hinaus die erforderlichen Eingaben, Anzeigen, Kontrollen oder dergleichen ermöglicht.

Besonders vorteilhaft ist es, wenn hierzu ein Softwareprogramm vorgesehen wird, welches eine Dialogabfrage zur Eingabe der zum Betrieb des jeweiligen Sensors erforderlichen anlageseitigen Daten aufweist, damit insbesondere bei der ersten Inbetriebnahme der Messbereich des Sensors bereits in zweckmäßiger Weise festgelegt wird, wonach dann die automatisierte Anpassung erfolgt. Eine solche Dialogabfrage kann datenbankgestützt sein, wobei die Datenbank zweckmäßigerweise cloudbasiert ist, sodass sie mittels Datenkommunikation, sei es von der Steuerelektronik und/oder dem Eingabegerät, zugänglich ist.

Besonders vorteilhaft ist es, wenn als Sensor ein Drucksensor, insbesondere ein Differenzdrucksensor eingesetzt wird, welcher zum Beispiel den Differenzdruck zwischen Eingang und Ausgang der Pumpe erfasst.

Vorteilhaft kann der Sensor ein Temperatursensor sein, dessen Sensorsignal typischerweise einer Signalaufbereitung bedarf, hierfür ist die erfindungsgemäße selbsttätige Festlegung des Messbereiches besonders vorteilhaft.

Die Erfindung ist nachfolgend anhand eines Ausführungsbeispiels näher erläutert. Es zeigen:
- Fig. 1: ein Schaltbild eines hydraulischen Systems,
- Fig. 2: ein schematisches Schaltbild über den Aufbau eines Sensors,
- Fig. 3: die Anpassung des Messbereichs eines Drucksensors,
- Fig. 4: die Auswirkung der Anpassung des Messbereichs auf die Messung,
- Fig. 5: die Anpassung von Verstärkung und Offset.

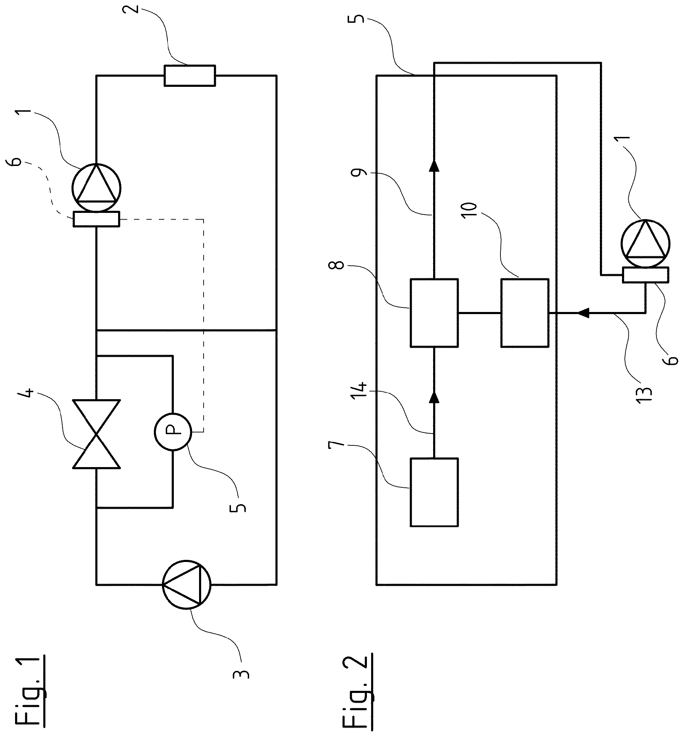

Fig. 1 zeigt beispielhaft einen hydraulischen Kreis mit einer ersten Pumpe 1, welche zu einem Verbraucher 2 fördert, dessen Ausgang mit dem Eingang der Pumpe 1 sowie dem Eingang einer zweiten Pumpe 3 verbunden ist, an deren Ausgang ein Ventil 4 anschließt, welches den Ausgang der zweiten Pumpe 3 mit dem Eingang der ersten Pumpe 1 verbindet.

Parallel zum Ventil 4 ist ein Drucksensor 5 angeordnet. Dieser Drucksensor 5 ist ein Differenzdrucksensor, der den Druckabfall am Ventil 4 erfasst. Der Sensor 5 ist mit einer Steuerelektronik 6 der Pumpe 1 verbunden, die Teil einer Frequenzumrichterelektronik eines die Kreiselpumpe 1 antreibenden Elektromotors ist.

Die Steuerelektronik 6 ist ausgebildet, um den angeschlossenen Drucksensor 5 zum einen als Drucksensor zu erkennen und zum anderen den Messbereich dieses Drucksensors 5 festzulegen, wie dies weiter unten beschrieben ist. Das elektrische Signal des Drucksensors 5, entspricht einem gemessenen Druck und bildet die Regelgröße eines Regelkreises, welcher Teil der Steuerelektronik 6 ist, dessen Stellgröße durch entsprechende Ansteuerung der Pumpe 1 variiert wird.

Wie das Schaltbild gemäß Fig. 2 verdeutlicht, weist der Drucksensor 5 ein Sensorelement 7 auf, dessen Ausgangssignal 14 mittels einer Sensorelektronik 8 aufbereitet ist, deren Ausgang das eigentliche Sensorsignal 9 bildet.

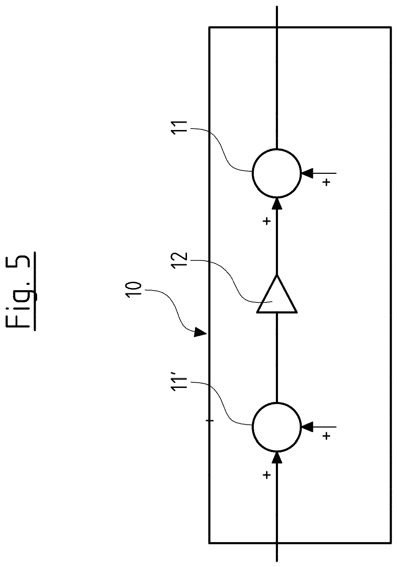

Das Sensorsignal 9 ist hier ein Spannungssignal, wobei je nach Messbereich jedem Spannungswert ein bestimmter Druckwert zugeordnet ist. Teil der Sensorelektronik 8 ist der in Fig. 2 symbolisierte Teil 10, welcher in Fig. 5 im Einzelnen dargestellt ist und welcher nach Festlegung eines Messbereichs zur Anpassung des Offset 11 /Bias 11' und der Verstärkung 12 dient. In Fig. 2 ist das von der Sensorelektronik 8 an die Steuerelektronik 6 übermittelte Sensorsignal mit 9 gekennzeichnet.

Ein Stellsignal ist mit 13 gekennzeichnet. Es ist das Signal 13, welches von der Steuerelektronik 6 an die Sensorelektronik 8 zur Einstellung des Messbereiches sowie von Offset 11 oder Bias 11' und Verstärkung 12 dient. Auch wenn, wie anhand von Fig. 2 beschrieben und dargestellt, die Sensorelektronik 8 dem Drucksensor 5 zugeordnet ist, so kann diese oder können zumindest Teile davon auch der Steuerelektronik 6 zugeordnet sein.

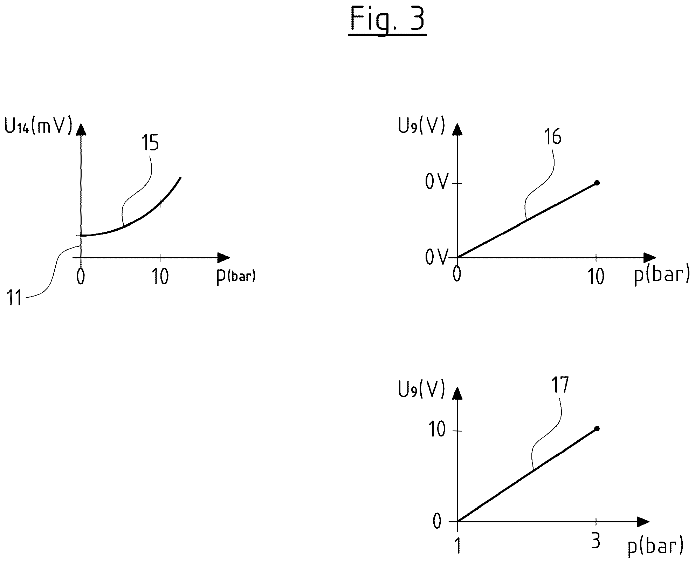

Anhand von Fig. 3 ist beispielhaft eine Anpassung des Messbereichs des Drucksensors 5 dargestellt. Das Sensorelement 7 gibt in Abhängigkeit des am Sensorelement 7 anliegenden Drucks, welcher zwischen 0 und 10 bar liegen kann, ein Spannungssignal im Millivoltbereich ab. Wie die Krümmung der Kurve 15, welche die Kennlinie des Sensorelementes darstellt, also die Zuordnung zwischen Druck und Spannung des Sensorelementsignals 14, verdeutlicht, ist der Signalverlauf über den Messbereich nicht linear. Dies wird mittels der Sensorelektronik 8 ausgeglichen. Ebenso wird der Offset 11 des Sensorelementsignals 14, der bei einigen Millivolt liegt, mittels der Sensorelektronik 8 ausgeglichen. Die Sensorelektronik 8 verstärkt darüber hinaus das Messsignal, so dass sich am Ausgang der Sensorelektronik 8, also am Ausgang des Drucksensors 5, ein Signal entsprechend der Kurve 16 ergibt, welches zwischen 0 und 10 Volt liegt, dem linear einen Druck zwischen 0 und 10 bar zugeordnet ist. Die Kurve 16 bildet somit die Kennlinie des Sensors 5.

Das Sensorsignal 9 wird nach Anschluss des Sensors 5 an die Steuerelektronik 6 und Identifizierung und Registrierung des Sensors 5 in der Steuerelektronik nach Inbetriebnahme der Pumpe kontinuierlich erfasst und gespeichert. Dies kann alternativ auch nur in zeitlichen Abständen erfolgen, indem beispielsweise alle fünf Sekunden das Sensorsignal abgefragt und gespeichert wird. Dies erfolgt über eine zuvor bestimmte Zeit von beispielsweise zwei Stunden, zwei Tagen oder dergleichen. Diese vorbestimmte Zeit kann steuerelektronikseitig einstellbar sein. Dabei erfolgt die Speicherung des Sensorsignals 9 vorzugsweise nur hinsichtlich der maximalen und minimalen Werte. Es genügt hier also ein Register für den Maximalwert und ein Register für den Minimalwert, wobei jeweils überprüft wird, ob das aktuelle Sensorsignal den registrierten Maximalwert überschreitet oder den registrierten Minimalwert unterschreitet. In diesem Fall wird das Register durch das aktuelle Sensorsignal ersetzt, andernfalls bleibt es unverändert. Nach Ablauf der vorbestimmten Zeit werden die Registerwerte gegebenenfalls mit einem Sicherheitszuschlag zur Festlegung des Messbereiches herangezogen. Dieser seitens der Steuerelektronik 6 ermittelte Messbereich wird durch ein Stellsignal 13 in die Sensorelektronik 8 übertragen.

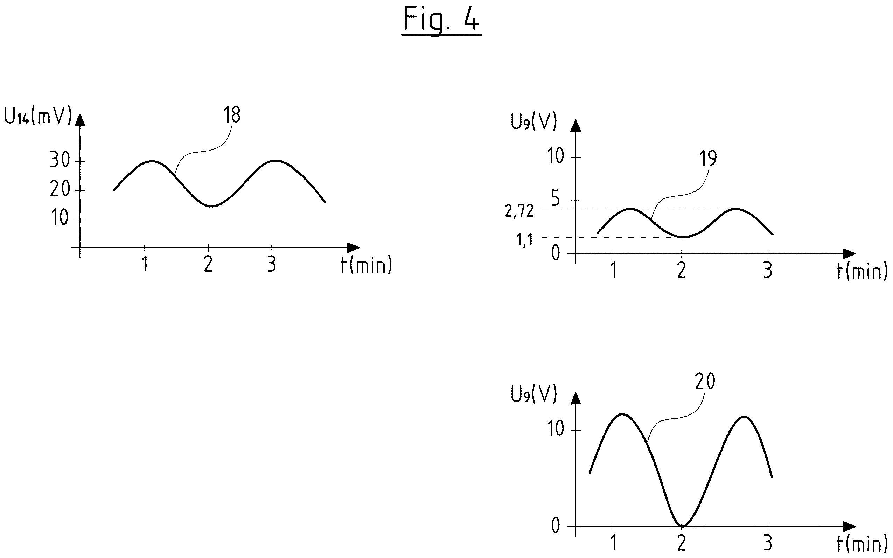

Bei dem anhand von Fig. 4 dargestellten Ausführungsbeispiel sind in dem ersten Zeitintervall (in der vorbestimmten Zeit) nach Inbetriebnahme Spannungen zwischen 1,1 Volt und 2,72 Volt (entsprechend Kurve 19) ermittelt worden. Der Messbereich wird anhand dieser Werte nach Berücksichtigung eines 10%igen Sicherheitszuschlags folglich auf 1 bis 3 bar festgelegt, wobei die Sensorelektronik 8 so adaptiert wird, dass in dem Druckbereich zwischen 1 bar und 3 bar ein linearer Signalverlauf zwischen 0 und 10 Volt des Sensorsignals 9 erzeugt wird. Wie die Kurve 17 zeigt, ist nicht nur der Messbereich anhand der zuvor ermittelten Sensorsignale 9 festgelegt worden, es ist auch der Offset 11 angepasst worden, das heißt, die Kurve 17 ist so angepasst worden, dass ein 0 Volt Sensorsignal einem Druck von 1 bar am Sensorelement 7 entspricht. Weiterhin ist die Verstärkung 12 so adaptiert worden, dass der Spannungsbereich zwischen 0 und 10 Volt, den die Sensorelektronik 8 erzeugen kann, linear auf den Messbereich von 2 bar, nämlich zwischen 1 bar und 3 bar aufgeteilt worden ist.

Dieser Adaptionsprozess von Kurve 16 zu Kurve 17 wird durch die Steuerelektronik 6 der Pumpe 1 in Abhängigkeit der innerhalb einer vorgegebenen Zeit empfangenen Sensorsignale 9 eingestellt.

Dieser Vorgang wird selbsttätig von der Steuerelektronik 6 nach Ablauf vorgegebener Zeitintervalle wiederholt, wobei dann grundsätzlich drei Möglichkeiten gegeben sind:
1. Es sind die Registerwerte gleich geblieben, dann erfolgt keine Änderung des Messbereiches.
2. Wenn die Registerwerte hinsichtlich des Minimalwertes gestiegen und/oder hinsichtlich des Maximalwertes gefallen sind, dann erfolgt eine entsprechende Anpassung des Messbereiches zur einem kleineren Messbereich hin. Offset 11 und Verstärkung 12 werden entsprechend angepasst.
3. Wenn jedoch die Register einen Wert im Bereich des hier 10%igen Sicherheitszuschlages aufweisen, dann wird das initiale Verfahren zur Festlegung des Messbereichs wie eingangs beschrieben wiederholt.

Durch zeitliche Erfassung der Messwerte, das heißt, durch eine zeitliche Spreizung der Register kann noch weiter differenziert werden, indem registerseitig nicht nur festgelegt wird, welches der Maximal- und welches der Minimalwert ist, sondern über welche zeitliche Dauer, bezogen auf das Zeitintervall, diese Werte erreicht worden sind. So kann beispielsweise festgelegt werden, dass eine initiale Messwertanpassung nur dann erfolgt, wenn der Maximal- und/oder Minimalwert über mindestens 5% der Intervallzeit erreicht worden ist, wenn kurzzeitige Spitzen, die außerhalb des festgelegten Messbereiches im Hinblick auf die Messgenauigkeit der übrigen Messwerte toleriert werden können.

Anhand von Fig. 4 sind beispielhaft ein Sensorelementsignal 14 über die Zeit, ein sich dabei ergebendes Sensorsignal 9 über die Zeit sowie ein sich nach darauf erfolgter Festlegung des Messbereichs sowie Offset- und Verstärkungsanpassung ergebender Messsignalverlauf dargestellt. Die Kurve 18, welche einen zeitlichen Verlauf des Sensorelementsignals 14 über 3,5 Minuten zeigt, ergibt Signalgrößen zwischen 15 und 28 Millivolt. Mittels der Sensorelektronik 8 wird dieses Sensorelementsignal 14 gemäß Kurve 18, wie vorbeschrieben, linearisiert und verstärkt, sodass sich ein Signalverlauf gemäß Kurve 19 ergibt, bei dem sich das Sensorsignal 9 über die dargestellte Zeit von 3,5 Minuten im Spannungsbereich zwischen 1,1 und 2,72 Volt bewegt. Nach Ablauf dieses Zeitintervalls in Kenntnis des Maximums und Minimums des Signalverlaufes über dieses Zeitintervall (die vorbestimmte Zeit) erfolgt dann die vorbeschriebene Festlegung des Messbereichs, Anpassung des Offset 11 sowie der Verstärkung 12, sodass sich eine Kurve 20 ergibt, welche den vollen Signalbereich zwischen 0 und 10 Volt ausnutzt und somit eine anwendungsspezifische Anpassung erfahren hat, welche die Messgenauigkeit deutlich erhöht.

Dabei ist die Anpassung und Festlegung des Messbereichs derart erfolgt, dass der etwa bei 2 Minuten auf der Kurve 19 erreichte Minimalwert von 1,1 Volt den Nullpunkt der Kurve 20 repräsentiert und der Maximalwert zum Zeitpunkt 2,5 der Kurve 19, der bei ca. 2,72 Volt liegt, durch einen Maximalwert von 10 Volt des Sensorsignals 9 repräsentiert wird.

Unter initialer Festlegung des Messbereichs wird die erstmalige, von der Steuerelektronik 6 der Pumpe 1 selbsttätig durchgeführte Messbereichsfestlegung verstanden. Eine solche erneute initiale Messbereichsfestlegung kann, wie weiter oben beschrieben, erforderlich sein, wenn sich aufgrund der in einem Zeitintervall erfassten Messwerte ergibt, dass der Messbereich erweitert werden muss.

Die Einstellung der vorbestimmten Zeit, nach deren Ablauf eine solche initiale Messbereichsfestlegung der Steuerelektronik 6 erfolgt, kann einstellbar sein, ebenfalls die Zeit der nachfolgenden Zeitintervalle, nach denen der Messbereich überprüft wird. Auch kann die Registrierung des Sensors in der Pumpenelektronik vollautomatisch oder teilautomatisch ablaufen, für letzteres Verfahren sind ebenfalls Eingaben erforderlich. Diese Eingaben können entweder an der Pumpe selbst, das heißt, typischerweise an dafür am Steuerelektronikgehäuse vorgesehenen Schaltflächen oder anderen Schaltelementen erfolgen, bevorzugt jedoch drahtlos mittels eines Eingabegeräts, zum Beispiel eines Smartphones oder Tablets, und softwareunterstützt, indem auf dem Eingabegerät eine entsprechende App gestartet wird, die diese Eingaben gezielt abfragt und an die Steuereinheit überträgt. Derartige drahtlose Datenübertragung, sowohl in direkter Form als auch indirekt über einem externen Server unter Nutzung einer cloudbasierten Datenbank zählen heutzutage zum Stand der Technik und werden daher hier nicht im Einzelnen beschrieben.

### Bezugszeichenliste

- 1: erste Pumpe
- 2: Verbraucher
- 3: zweite Pumpe
- 4: Ventil
- 5: Drucksensor
- 6: Steuerelektronik
- 7: Sensorelement
- 8: Sensorelektronik
- 9: Sensorsignal
- 10: Teil von 8
- 11: Offset
- 11': Bias
- 12: Verstärkung
- 13: Stellsignal
- 14: Sensorelementsignal
- 15: Kennlinie des Sensorelements
- 16: Kennlinie des Sensors 9
- 17: Kennlinie des Sensors 9 nach Anpassung des Messbereichs
- 18: Sensorelementsignalverlauf über die Zeit
- 19: Sensorsignalverlauf über die Zeit
- 20: Sensorsignalverlauf über die Zeit nach Anpassung des Messbereichs

## Patentansprüche

1. Elektromotorisch angetriebene Pumpe (1) mit einer Steuerelektronik (6), welche zum Anschluss mindestens eines Sensors (5) vorgesehen ist, **dadurch gekennzeichnet, dass** die Steuerelektronik (6) dazu ausgebildet ist, das mindestens eine Ausgangssignal (9) des mindestens einen angeschlossenen Sensors (5) kontinuierlich oder in zeitlichen Abständen zu erfassen und nach Ablauf einer vorbestimmten Zeit anhand der erfassten Maximal- und Minimalwerte des Ausgangssignals (9) selbsttätig den Messbereich des Sensors (5) festzulegen und diesen Messbereich durch ein Stellsignal (13) in eine Sensorelektronik (8) des Sensors zu übertragen.

2. Pumpe nach Anspruch 1, **dadurch gekennzeichnet, dass** die Steuerelektronik (6) dazu ausgelegt ist, den Messbereich des mindestens einen Sensors (5) in vorbestimmten Zeitintervallen anhand der in einem, vorzugsweise dem letzten, vorangegangenen Zeitintervall erfassten Werte selbsttätig zu überprüfen und anzupassen.

3. Pumpe nach Anspruch 2, **dadurch gekennzeichnet, dass** die Steuerelektronik (6) dazu ausgelegt ist, dann, wenn die im vorangegangenen Zeitintervall erfassten Werte für eine aufsummierte Zeitdauer von mehr als 5% bis 25% des Zeitintervalls auf der unteren und/oder oberen Grenze des festgelegten Messbereichs liegen, die Festlegung des Messbereichs gemäß Anspruch 1 erneut vorzunehmen.

4. Pumpe nach einem der vorhergehenden Ansprüche, **dadurch gekennzeichnet, dass** die Steuerelektronik (6) dazu ausgelegt ist, selbsttätig oder durch eine externe Dateneingabe den angeschlossenen Sensor (5) zu registrieren.

5. Pumpe nach einem der vorhergehenden Ansprüche, **dadurch gekennzeichnet, dass** die Steuerelektronik (6) zur selbsttätigen Ermittlung der Art des Sensors (5) oder seiner Identifizierungskennzeichnung ausgebildet ist.

6. Pumpe nach einem der vorhergehenden Ansprüche, **dadurch gekennzeichnet, dass** die Steuerelektronik (6) dazu ausgebildet ist, entsprechend dem festgelegten Messbereich die Verstärkung (12) des Sensorsignals (9) anzupassen.

7. Pumpe nach einem der vorhergehenden Ansprüche, **dadurch gekennzeichnet, dass** die Steuerelektronik (6) dazu ausgebildet ist, entsprechend dem festgelegten Messbereich den Offset (11) des Sensorsignals (9) anzupassen.

8. Pumpe nach einem der vorhergehenden Ansprüche, **dadurch gekennzeichnet, dass** die Pumpe eine Dosierpumpe ist.

9. Pumpe nach Ansprüchen 2-7, **dadurch gekennzeichnet, dass** die Pumpe (1) eine Kreiselpumpe, insbesondere eine Nasslaufkreiselpumpe ist.

10. Pumpe nach einem der vorhergehenden Ansprüche, **dadurch gekennzeichnet, dass** die Steuerelektronik (6) eine Regelung umfasst und dass der Sensor (5) zur Erfassung einer Regelgröße vorgesehen ist.

11. Pumpe nach einem der vorhergehenden Ansprüche, **dadurch gekennzeichnet, dass** die Steuerelektronik (6) zur drahtlosen Eingabe von Sensorparametern ausgebildet ist.

12. Pumpe nach Anspruch 11, **dadurch gekennzeichnet, dass** die Steuerelektronik Mittel zur drahtlosen Datenkommunikation aufweist und mittels eines vorzugsweise drahtlos angebundenen Eingabegeräts einstellbar ist.

13. Pumpe nach Anspruch 12, **dadurch gekennzeichnet, dass** das Eingabegerät ein Smartphone oder Tabletcomputer ist, auf dem ein Softwareprogramm, insbesondere eine App, installiert ist, über die eine Datenkommunikation mit der Steuerelektronik der Pumpe erfolgt.

14. Pumpe nach Anspruch 13, **dadurch gekennzeichnet, dass** das Softwareprogramm eine Dialogabfrage zur Eingabe der zum Betrieb des Sensors erforderlichen anlageseitigen Daten aufweist.

15. Pumpe nach einem der vorhergehenden Ansprüche, **dadurch gekennzeichnet, dass** der Sensor (5) ein Drucksensor, insbesondere ein Differenzdrucksensor ist.

16. Pumpe nach Ansprüche 1-14, **dadurch gekennzeichnet, dass** der Sensor ein Temperatursensor ist.

## Claims

1. An electromotorically driven pump (1) with control electronics (6) provided for the connection of at least one sensor (5), **characterised in that** the control electronics (6) are designed to detect the at least one output signal (9) of the at least one connected sensor (5) in a continuous manner or in temporal intervals, and after completion of a predefined time to automatically set the measurement range of the sensor (5) on the basis of the detected maximal values and minimal values of the output signal (9) and to transmit this measurement range into sensor electronics (8) of the sensor by way of a control signal (13).

2. A pump according to claim 1, **characterised in that** the control electronics (6) are designed to automatically examine and adapt the measurement range of the at least one sensor (5) in predefined time intervals, on the basis of the values which are detected in a time interval, preferably in the last preceding time interval.

3. A pump according to claim 2, **characterised in that** the control electronics (6) are designed to carry out the setting of the measurement range according to claim 1 afresh, when the values detected in the preceding time interval lie at the lower and/or upper limit of the set measurement range, for a summed time duration of more than 5% to 25% of the time interval.

4. A pump according to one of the preceding claims, **characterised in that** the control electronics (6) are designed to register the connected sensor (5), automatically or by way of an external data input.

5. A pump according to one of the preceding claims, **characterised in that** the control electronics (6) are designed for automatically determining the type of the sensor (5) or its identification characterisation.

6. A pump according to one of the preceding claims, **characterised in that** the control electronics (6) are designed to adapt the amplification (12) of the sensor signal (9) in accordance with the set measurement range.

7. A pump according to one of the preceding claims, **characterised in that** the control electronics (6) are designed to adapt the offset (11) of the sensor signal (9) in accordance with the set measurement range.

8. A pump according to one of the preceding claims, **characterised in that** the pump is a metering pump.

9. A pump according to claims 2-7, **characterised in that** the pump (1) is a centrifugal pump, in particular a wet-running centrifugal pump.

10. A pump according to one of the preceding claims, **characterised in that** the control electronics (6) comprises a closed-loop control and that the sensor (5) is provided for detecting a control variable.

11. A pump according to one of the preceding claims, **characterised in that** the control electronics (6) are designed for the wireless input of sensor parameters.

12. A pump according to claim 11, **characterised in that** the control electronics comprise means for the wireless data communication and can be set by way of a preferably wirelessly connected input appliance.

13. A pump according to claim 12, **characterised in that** the input appliance is a smartphone or tablet computer, on which a software program, in particular an app, is installed, via which a data communication with the control electronics of the pump is effected.

14. A pump according to claim 13, **characterised in that** the software program comprises a dialogue query for the input of data concerning the facility, said data being necessary for the operation of the sensor.

15. A pump according to one of the preceding claims, **characterised in that** the sensor (5) is a pressure sensor, in particular a differential pressure sensor.

16. A pump according to claims 1-14, **characterised in that** the sensor is a temperature sensor.

## Revendications

1. Pompe (1) entraînée par un moteur électrique, comprenant une électronique de commande (6) prévue pour le raccordement d'au moins un capteur (5), **caractérisée en ce que** l'électronique de commande (6) est conçue pour détecter en continu ou à des intervalles de temps ledit au moins un signal de sortie (9) dudit au moins un capteur (5) raccordé et pour définir de manière automatique la plage de mesure du capteur (5) en se basant sur les valeurs maximales et minimales détectées du signal de sortie (9) après écoulement d'un temps prédéterminé et pour transmettre ladite plage de mesure à une électronique de capteur (8) dudit capteur grâce à un signal de réglage (13).

2. Pompe selon la revendication 1, **caractérisée en ce que** l'électronique de commande (6) est conçue pour vérifier et adapter de manière automatique la plage de mesure dudit au moins un capteur (5) à des intervalles de temps prédéterminés en se basant sur les valeurs détectées dans un intervalle de temps précédent, de manière préférée le dernier intervalle de temps.

3. Pompe selon la revendication 2, **caractérisée en ce que** l'électronique de commande (6) est conçue pour mettre à nouveau en oeuvre la détermination de la plage de mesure selon la revendication 1 lorsque les valeurs détectées dans l'intervalle de temps précédent se situent sur la limite inférieure et/ou supérieure de la plage de mesure déterminée pendant une durée cumulée supérieure à une plage comprise entre 5 % et 25 % de l'intervalle de temps.

4. Pompe selon l'une quelconque des revendications précédentes, **caractérisée en ce que** l'électronique de commande (6) est conçue pour enregistrer le capteur raccordé (5) de manière automatique ou grâce à une entrée de données externe.

5. Pompe selon l'une quelconque des revendications précédentes, **caractérisée en ce que** l'électronique de commande (6) est conçue pour déterminer de manière automatique le type du capteur (5) ou sa caractéristique d'identification.

6. Pompe selon l'une quelconque des revendications précédentes, **caractérisée en ce que** l'électronique de commande (6) est conçue pour adapter le gain (12) du signal de capteur (9) en fonction de la plage de mesure définie.

7. Pompe selon l'une quelconque des revendications précédentes, **caractérisée en ce que** l'électronique de commande (6) est conçue pour adapter le décalage (11) du signal de capteur (9) en fonction de la plage de mesure définie.

8. Procédé selon l'une quelconque des revendications précédentes, **caractérisé en ce que** la pompe est une pompe de dosage.

9. Pompe selon les revendications 2 à 7, **caractérisée en ce que** la pompe (1) est une pompe centrifuge, en particulier une pompe centrifuge de type humide.

10. Pompe selon l'une quelconque des revendications précédentes, **caractérisée en ce que** l'électronique de commande (6) comprend une régulation et **en ce que** le capteur (5) est prévu pour détecter une grandeur de régulation.

11. Procédé selon l'une quelconque des revendications précédentes, **caractérisé en ce que** l'électronique de commande (6) est conçue pour une entrée sans fil de paramètres de capteur.

12. Pompe selon la revendication 11, **caractérisée en ce que** l'électronique de commande comprend des moyens permettant de communiquer des données sans fil et peut être réglée au moyen d'un appareil d'entrée relié de manière préférée sans fil.

13. Pompe selon la revendication 12, **caractérisée en ce que** l'appareil d'entrée est un smartphone ou une tablette sur lequel ou laquelle est installé un programme informatique, en particulier une application, par l'intermédiaire duquel intervient une communication de données avec l'électronique de commande de la pompe.

14. Pompe selon la revendication 13, **caractérisée en ce que** le programme informatique comprend une boîte de dialogue permettant l'entrée des données système nécessaires au fonctionnement du capteur.

15. Pompe selon l'une quelconque des revendications précédentes, **caractérisée en ce que** le capteur (5) est un capteur de pression, en particulier un capteur de pression différentielle.

16. Pompe selon les revendications 1 à 14, **caractérisée en ce que** le capteur est un capteur de température.
